(19) Europäisches Patentamt
European Patent Office
Office européen des brevets

(11) Veröffentlichungsnummer: **0 301 407 B1**

(12) **EUROPÄISCHE PATENTSCHRIFT**

(45) Veröffentlichungstag der Patentschrift: **12.05.93**

(51) Int. Cl.$^5$: **C08L 59/00**, C08K 7/10

(21) Anmeldenummer: **88111753.5**

(22) Anmeldetag: **21.07.88**

Die Akte enthält technische Angaben, die nach dem Eingang der Anmeldung eingereicht wurden und die nicht in dieser Patentschrift enthalten sind.

# (54) Mit Wollastonit verstärkte Polyoximethylen-Formmassen, Verfahren zu ihrer Herstellung und Verwendung.

(30) Priorität: **28.07.87 DE 3724869**

(43) Veröffentlichungstag der Anmeldung:
**01.02.89 Patentblatt 89/05**

(45) Bekanntmachung des Hinweises auf die Patenterteilung:
**12.05.93 Patentblatt 93/19**

(84) Benannte Vertragsstaaten:
**BE CH DE ES FR GB IT LI NL**

(56) Entgegenhaltungen:
**EP-A- 0 122 560**
**EP-A- 0 181 542**
**DE-B- 2 319 359**

**MACHINE DESIGN, Band 52, Nr. 13, Juni 1980, Seiten 113-116; J.E. THEBERGE. "How mineral fillers improve plastics"**

**PATENT ABSTRACTS OF JAPAN, Band 9, Nr. 283 (C-313) (2006), 9. November 1985; & JP-A-60 127 346**

**Handbook of Fillers and Reinforcements for Plastics, H.S. Katz and J.V. Milewski, New York 1978, p. 405**

(73) Patentinhaber: **BASF Aktiengesellschaft**
**Carl-Bosch-Strasse 38**
**W-6700 Ludwigshafen(DE)**

(72) Erfinder: **Goerrissen, Heiner, Dr.**
**Im Zinkig 112**
**W-6700 Ludwigshafen(DE)**
Erfinder: **Heinz, Gerhard, Dr.**
**Im Vogelsang 2**
**W-6719 Weisenheim(DE)**
Erfinder: **Hilt, Albrecht, Dr.**
**Moselstrasse 5**
**W-6703 Limburgerhof(DE)**
Erfinder: **Simon, Georg Nikolaus, Dr.**
**Untere Hart 10**
**W-6703 Limburgerhof(DE)**

EP 0 301 407 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, Polyoximethylen-homo- und/oder -copolymerisate - im folgenden abgekürzt POM genannt - mit Verstärkungsmitteln und Zusatzstoffen zu versehen, um bestimmte physikalische Eigenschaften zu verbessern und ihre Verwendungsmöglichkeiten zu erweitern.

Nach Angaben der DE-A-1 208 490 (GB-A-999 422) finden POM, die Metalle, Metalloxide, Metallcarbonate, Metallsilikate, Kohlenstoff, Kieselsäure und/oder Bor sowie gegebenenfalls Glas- und Asbestfasern enthalten, Verwendung zur Herstellung von Verbundmaterialien.

Angaben bezüglich der Teilchengröße der eingesetzten Füllstoffe werden jedoch nicht offenbart.

Verstärkte Formmassen aus Thermoplasten, die keine aliphatisch ungesättigten Gruppen gebunden enthalten, und anorganischen Verstärkungsmitteln, die durch Kupplungsmittel, wie z.B. Silane, an die Thermoplast-Matrix gebunden sind, werden beispielsweise beschrieben in der GB-A-1 069 752. Als geeignete Verstärkungsmittel, die vorzugsweise Korngrößen von kleiner als 250 µm aufweisen und in einer Menge von vorzugsweise 40 bis 95 Gew.%, bezogen auf das Gesamtgewicht der Formmassen, verwendet werden, werden beispielsweise Calcium-, Aluminium-, Magnesium-und Calcium-Magnesiumsilikate genannt.

Preß- und Formmassen mit verbesserter Verarbeitbarkeit bestehen gemäß DE-B-23 19 359 (US 3,775,363) aus einer innigen Mischung aus 98 bis 25 Gew.% POM und 2 bis 75 Gew.% eines nadelförmigen Calciummetasilikats ($CaSiO_3$), das kein Kupplungsmittel enthält. Angaben hinsichtlich der Teilchengröße und dem Länge/Dicke-Verhältnis des Verstärkungsmittels werden auch in dieser Auslegeschrift nicht gemacht.

Die Verwendung von Füllstoffen mit einer mittleren Teilchengröße von kleiner als 10 µm zur Verbesserung der Kerbschlagzähigkeit von Formmassen aus POM und thermoplastischem Polyurethan wird beschrieben in der DE-A-33 03 760 (US-A-4 517 319).

Thermoplastische POM-Formmassen mit hoher Abriebfestigkeit enthalten nach Angaben der EP-A-0 181 542 (US 4 645 785) 40 bis 94,7 Gew.-Teile eines POM, 5 bis 50 Gew.-Teile Wollastonit, 0,2 bis 5 Gew.-Teile N-Hydroxymethylmelamine, in denen die Hvdroxymethylgruppen zumindest partiell mit Alkanolen verethert sind, 0,1 bis 5 Gew.-Teile Silikonöl mit einem Polykondensationsgrad n von 10 bis 5000 und/oder 0,1 bis 10 Gew.-Teile Polyethylen und/oder Copolymere von Ethylen mit $\alpha$-Olefinen mit einem Molekulargewicht von 100.000 bis 1.000.000 sowie gegebenenfalls Zusatzstoffe. Hinsichtlich des verwendeten Wollastonits wird lediglich vermerkt, daß das nadelförmige Calciummetasilikat in der Regel eine Teilchengröße von 1 bis 10 µm aufweist.

Bekannt ist ferner das mechanische Einarbeiten der Füllstoffe in POM, wobei als geeignete Vorrichtungen z.B. Knetmaschinen und Schneckenextruder genannt werden. Die Füllstoffe werden z.B. gemäß DE-B-16 69 752 in POM in Gegenwart von 1 bis 20 Gew.% 1,3,5-Trioxan eingearbeitet und das 1,3,5-Trioxan sowie gegebenenfalls weitere flüchtige Anteile nach dem Aufschmelzen des füllstoffhaltigen POM auf Entgasungsvorrichtungen weitgehend aus dem POM entfernt.

Die Aufgabe der vorliegenden Erfindung bestand darin, die mechanischen Eigenschaften von Füllstoff, insbesondere Wollastonit, enthaltenden POM-Formmassen zu verbessern.

Diese Aufgabe konnte überraschenderweise durch die Verwendung von Wollastonit mit einer bestimmten Kristallform gelöst werden.

Gegenstand der Erfindung sind somit verstärkte Polyoximethylen-Formmassen, die bestehen aus

(A) 95 bis 50 Gew.-Teile mindestens eines Polyoximethylen-homo- und/oder -copolymerisates,

(B) 5 bis 50 Gew.-Teile Wollastonit,

wobei sich die Gew.-Teile der Komponenten (A) und (B) auf 100 Gew.-Teile ergänzen sowie

(c) gegebenenfalls Zusatzstoffe in wirksamen Mengen,

und die dadurch gekennzeichnet sind, daß die nadelförmigen Wollastonit-Kristalle (B) eine mittlere Dicke (Durchmesser) der Nadeln von gleich oder kleiner als 5 µm, vorzugsweise gleich oder kleiner als 4 µm und ein mittleres Länge/Dicke-Verhältnis von gleich oder größer als 5, vorzugsweise gleich oder größer als 7, besitzen.

Gegenstände der Erfindung sind ferner ein Verfahren zur Herstellung der erfindungsgemäßen mit Wollastonit verstärkten Polyoximethylen-Formmassen nach Anspruch 5 und ihre Verwendung zur Herstellung von Formkörpern nach Anspruch 8.

Überraschenderweise zeigte sich, daß nicht nur die Partikelgrößenverteilung der Füllstoffe, sondern auch die Form des verwendeten Wollastonits die mechanischen Eigenschaften der erhaltenen POM-Formmassen beeinflussen.

Die erfindungsgemäß verstärkten Polyoximethylen-Formmassen enthalten zweckmäßigerweise bzw. bestehen aus

(A) 95 bis 50 Gew.-Teilen, vorzugsweise 90 bis 60 Gew.-Teilen mindestens eines Polyoximethylen-homo- und/oder -copolymerisats,

(B) 5 bis 50 Gew.-Teilen, vorzugsweise 10 bis 40 Gew.-Teilen Wollastonit, wobei sich die Gew.-Teile der Komponenten (A) und (B) auf 100 Gew.-Teile ergänzen sowie

(C) gegebenenfalls Zusatzstoffen in wirksamen Mengen, wobei, sofern die Zusatzstoffe nicht vollständig entbehrlich sind, d.h. die Menge gleich null ist, unter wirksamen Mengen üblicherweise eine Gesamtmenge von 0,01 bis 60 Gew.-Teilen, vorzugsweise 0,02 bis 30 Gew.-Teilen pro 100 Gew.-Teilen der Gesamtmenge der Komponenten (A) und (B) zu verstehen ist.

Hinsichtlich der verwendbaren Aufbaukomponenten zur Herstellung der erfindungsgemäß verstärkten POM-Formmassen ist folgendes auszuführen:

(A) Geeignete Polyoximethylene (A) sind Homopolymerisate des Formaldehyds oder Copolymerisate des Formaldehyds sowie des Trioxans mit cyclischen und/oder linearen Formalen, wie Butandiolformal oder Epoxiden wie Ethylen- oder Propylenoxid. Die Homopolymerisate haben in der Regel thermisch stabile Endgruppen, wie Ester- oder Ethergruppen. Die Copolymerisate des Formaldehyds oder des Trioxans weisen vorteilhaft mehr als 50 %, insbesondere mehr als 75 % Oximethylengruppen auf. Besonders bewährt haben sich Copolymerisate, in denen mindestens 0,1 % Gruppen des Comonomeren enthalten sind, die mindestens zwei benachbarte Kohlenstoffatome in der Kette haben. Besondere technische Bedeutung haben Polyoximethylene erlangt, die 1 bis 10 Gew.% Comonomere enthalten. Solche Copolymerisate sind in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Oligo- oder Polyformalen, wie Polydioxolan oder Polybutandiolformal erhältlich. In der Regel haben die verwendeten Polyoximethylene ein Molekulargewicht (Gewichtsmittel) von 2000 bis 100.000, vorzugsweise von 10.000 bis 100.000 und einem MFI bei 190°C, 21,17 N nach DIN 53 735 von 0,5 bis 200, vorzugsweise von 1 bis 50. Besondere Bedeutung haben Polymerisate, die aus Trioxan und 1 bis 10 Mol.% Ethylenoxid, 1,3-Dioxolan oder Butandiolformal aufgebaut sind, erlangt. Die erfindungsgemäßen Formmassen enthalten, wie bereits dargelegt wurde, zweckmäßigerweise 50 bis 95 Gew.%, bezogen auf das Gewicht der Komponenten (A) und (B), mindestens eines Polyoximethylens.

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet, und zwar in einer Menge von 0,05 bis 5 Gew.%, vorzugsweise 0,1 bis 2 Gew.%, bezogen auf die Gesamtmonomermenge.

(B) Als Komponente (B) enthalten die verstärkten Formmassen Wollastonit, ein nadelförmiges Calciummetasilikat ($CaSiO_3$), das erfindungsgemäß eine mittlere durchschnittliche Dicke (Durchmesser) von gleich oder kleiner als 5 $\mu$m, vorzugsweise von 0,5 bis 5 $\mu$m und insbesondere von 0,8 bis 4 $\mu$m besitzt und ein mittleres Verhältnis von Länge zu Dicke von gleich oder größer als 5, vorzugsweise von 5 bis 25 und insbesondere von 7 bis 20 aufweist. Der verwendete Wollastonit kann zusätzlich mit Silanen, z.B. $\gamma$-Aminopropyltriethoxisilan, ausgerüstet werden.

(C) Die erfindungsgemäß verstärkten POM-Formmassen können, wie bereits ausgeführt wurde, gegebenenfalls Zusatzstoffe (C) in wirksamen Mengen enthalten. Als geeignete Zusatzstoffe kommen beispielsweise in Betracht:

N-Hydroxymethylmelamine, in denen die Hydroxymethylgruppen zumindest partiell mit Alkanolen verethert sind. Die Melamine enthalten zweckmäßigerweise 2 bis 6 Hydroxymethylgruppen, die mit $C_1$- bis $C_4$-Alkanolen partiell verethert sind. Bevorzugt sind Melamine mit mindestens 2, vorzugsweise mindestens 4 Hydroxymethylgruppen, die vollständig mit $C_1$- bis $C_4$-Alkanolen verethert sind. Geeignete Verbindungen sind beispielsweise Dimethoxymethylmelamin, Diethoxymethylmelamin, Triethoxymethylmelamin, Tetramethoxymethylmelamin oder Tetrabutoxymethylmelamin. Besonders bewährt hat sich Tetramethoxymethylmelamin. Die vorgenannten Melaminderivate sind in an sich bekannter Weise erhältlich, wie sie z.B. in Houben-Weyl, Methoden der organischen Chemie, 4. Auflage, Band 14/2, Seite 368, ausführlich beschrieben wird. Von den partiell veretherten N-Hydroxymethylmelaminen werden üblicherweise pro 100 Gew.-Teilen der Gesamtmenge der Komponenten (A) und (B) 0,2 bis 5 Gew.-Teile, vorzugsweise 0,2 bis 2 Gew.-Teile eingesetzt.

Siliconöle mit einem Polykondensationsgrad n von 10 bis 5000, die gegebenenfalls in einer Menge von 0,1 bis 5 Gew.-Teilen, vorzugsweise 0,5 bis 2 Gew.-Teilen pro 100 Gew.-Teilen der Gesamtmenge der Komponenten (A) und (B) verwendet werden. Geeignete Siliconöle werden beispielsweise von Walter Noll in "Chemie und Technologie der Silicone", Verlag Chemie, 1968, Seite 393 bis 396, beschrieben. Geeignete Siloxanverbindungen sind beispielsweise solche der Formel

$$(R_1)_3-Si-O-[-\underset{(R_3)_2}{\underset{|}{Si}}-O]_n-Si(R_2)_3$$

in der $R_1$ und $R_2$ gleich oder verschieden sein können und jeweils einen $C_1$ – bis $C_4$ – Alkylrest oder einen Phenylrest bezeichnen und $R^3$ einen $C_1$ – bis $C_4$ – Alkylrest, einen Phenylrest oder den Rest der Formel

$$-O-[Si-O]_n-R_1$$

bezeichnet, in der $R_1$ die oben angegebene Bedeutung hat und n für eine ganze Zahl von 0 bis 50 steht.

Anstatt der Siliconöle oder zusätzlich zu den Siliconölen können die erfindungsgemäß verstärkten POM – Formmassen gegebenenfalls 0,1 bis 10 Gew. – Teile, vorzugsweise 0,5 bis 5 Gew. – Teile pro 100 Gew. – Teilen der Gesamtmenge der Komponenten (A) und (B), Polyethylen und/oder Copolymere von Ethylen mit $\alpha$ – Olefinen mit einem Molekulargewicht von 100.000 bis 1.000.000 enthalten. Geeignete $\alpha$ – Olefine haben vorteilhafterweise 3 bis 6 Kohlenstoffatome. Die Comonomeren sind zweckmäßigerweise in Mengen von 1 bis 15 Mol.% im Copolymeren gebunden. Bevorzugt verwendet wird Polyethylen hoher und niedriger Dichte.

Als geeignete, gegebenenfalls mitverwendbare Zusatzstoffe (C) kommen ferner beispielsweise in Betracht: Stabilisatoren, Nukleierungsmittel, Antistatika, Licht – und Flammschutzmittel, Gleit – und Schmiermittel, Weichmacher, Pigmente, Farbstoffe, optische Aufheller, Entformungshilfsmittel und dergleichen. Als Zusatzstoff (C) insbesondere bewährt haben sich und daher vorzugsweise eingesetzt werden ein oder mehrere Antioxidantien mit phenolischer Struktur. Derartige Antioxidantien werden beschrieben z.B. in der DE – A – 27 02 661.

Als Stabilisatoren gegen den Einfluß von Wärme eignen sich insbesondere Polyamide, Amide mehrbasiger Carbonsäuren, Amidine, z.B. Dicyandiamid, Hydrazine, Harnstoffe, Poly – (N – vinyllactame) und Erdalkalisalze von aliphatischen, vorzugsweise hydroxylgruppenhaltigen, ein – bis dreibasigen Carbonsäuren mit 2 bis 20 Kohlenstoffatomen, z.B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4 – Hydroxyphenylalkansäuren, die 7 bis 13, vorzugsweise 7, 8 oder 9 Kohlenstoffatome aufweisen, mit Diolen, die 2 bis 6 Kohlenstoffatome enthalten. Als Lichtstabilisatoren sind beispielsweise $\alpha$ – Hydroxybenzophenonderivate und Benzotriazolderivate geeignet. Die Stabilisatoren werden zumeist in einer Menge von insgesamt 0,1 bis 5 Gew.%, vorzugsweise 0,5 bis 3 Gew.%, bezogen auf das Gewicht der Komponenten (A) und (B) verwendet.

Weiterhin können als Zusatzstoffe (C) auch verstärkend wirkende Füllstoffe wie Fasern, beispielsweise Kohlenstoff – oder insbesondere Glasfasern, die mit Haftvermittlern und/oder Schlichten ausgerüstet sein können, Anwendung finden. Die Fasern, die gegebenenfalls in Mengen von 5 bis 60 Gew.%, vorzugsweise von 10 bis 40 Gew.%, bezogen auf das Gewicht der Komponenten (A) und (B) eingesetzt werden, weisen zweckmäßigerweise einen Durchmesser von 5 bis 20 $\mu$m, vorzugsweise von 8 bis 15 $\mu$m auf und besitzen im Granulat im allgemeinen eine mittlere Faserlänge von 0,05 bis 1 mm, vorzugsweise von 0,1 bis 0,5 mm.

Zur Herstellung der erfindungsgemäß verstärkten POM – Formmassen werden der Wollastonit (B) und gegebenenfalls die Zusatzstoffe (C) vorzugsweise direkt in die Schmelze aus mindestens einem Polyoximethylen – homo – und/oder – copolymerisat (A) mittels einer geeigneten bekannten Vorrichtung eingebracht. Als Vorrichtungen bewährt haben sich hierfür besonders und werden daher vorzugsweise Extruder, insbesondere Doppelschneckenextruder verwendet, in welchen das POM aufgeschmolzen wird und bei einer Temperatur von 180 bis 260 °C, vorzugsweise 190 bis 240 °C der Wollastonit (B) sowie gegebenenfalls die Zusatzstoffe (C) in die Schmelze eingearbeitet werden. Verstärkte POM – Formmassen geringerer Qualität, jedoch mit zufriedenstellenden mechanischen Eigenschaften, können auch durch Vermischen des Wollastonits (B) mit granuliertem und/oder pulverisiertem POM (A) und anschließender Extrusion der Mischung in einem Extruder unter den genannten Temperaturbedingungen erhalten werden.

Die erfindungsgemäßen verstärkten POM – Formmassen eignen sich zur Herstellung von Formkörpern durch Spritzguß oder Extrusion. Die hergestellten Formkörper finden Verwendung u.a. in der Fahrzeug – , Elektrogeräte – und Elektronikindustrie.

Beispiele 1 bis 7 und Vergleichsbeispiele A bis L

Für die Beispiele und Vergleichsbeispiele verwendet wurde ein Copolymerisat aus Trioxan mit ungefähr 3 Gew.%, bezogen auf das Gesamtgewicht, Butandiolformal (Ultraform® N 2320) mit einem durchschnittli –

chen Molekulargewicht (Gewichtsmittel) von 70.000 und einem
MFI 190/2,16 = 9 g/10 min, das entweder stabilisiert und konfektioniert in Granulatform oder in Form eines Rohpolymerisats, welches noch ungefähr 5 Gew.% nicht umgesetztes Trioxan und ungefähr 5 Gew.% instabile Anteile enthielt, eingesetzt wurde. Das Copolymerisat wurde mit folgenden Zusatzstoffen versetzt:
0,3 Gew.% 1,6-Hexandiol-bis-3-(3,5-di-tert.butyl-4-hydroxiphenyl)-propionat (Irganox® 259 der Ciba-Geigy),
0,1 Gew.% eines Endgruppen verkappten Polyamids gemäß Beispiel 5-4 der US-A-3 960 984,
0,3 Gew.% eines Melamin-Formaldehyd-Polykondensats gemäß Beispiel 1 der DE-B-2 540 207 und
0,5 Gew.% Tetra(methoximethyl)melamin analog EP-A-0019761 und EP-A-0052740
Der Wollastonit - in der folgenden Tabelle abgekürzt "Woll." genannt - wurde mit folgenden mittleren Korndurchmessern und mittleren Länge/Durchmesser-Verhältnissen - abgekürzt L/D-Verhältnis - verwendet:

Typ 1 (Vergleich):

mittlerer Korndurchmesser ~ 1 µm, L/D-Verhältnis ~ 2,5, ohne Silanbeschichtung

Typ 2 (Vergleich):

mittlerer Korndurchmesser ~ 2 µm, L/D-Verhältnis ~ 4, ohne Silanbeschichtung

Typ 3 (erfindungsgemäß):

mittlerer Korndurchmesser ~ 3,5 µm, L/D-Verhältnis ~ 10, ohne Silanbeschichtung

Typ 4 (Vergleich):

mittlerer Korndurchmesser ~ 4 µm, L/D-Verhältnis ~ 4, ohne Silanbeschichtung

Typ 5 (Vergleich):

analog Typ 2, jedoch beschichtet mit 0,5 Gew.% $\gamma$-Aminopropyltriethoxisilan

Typ 6 (Vergleich):

mittlerer Korndurchmesser ~ 7 µm, L/D-Verhältnis ~ 10, ohne Silanbeschichtung

Typ 7 (erfindungsgemäß):

mittlerer Korndurchmesser ~ 4 µm, L/D-Verhältnis ~ 15, beschichtet mit 0,5 Gew.% $\gamma$-Aminopropyltriethoxisilan
Die Einarbeitung des Wollastonits in das Zusatzstoffe enthaltende Copolymerisat wurde auf einem Extruder des Typs ZSK 28 (Fa. Werner und Pfleiderer) bei 230°C vorgenommen. Dabei wurde der Wollastonit entweder mit Copolymerisat vorgemischt und in den Einzug des Extruders dosiert, oder das Copolymerisat wurde in den Extrudereinzug eingebracht und Wollastonit wurde dann separat über eine Öffnung am Extruder in die Copolymerisatschmelze eindosiert. Flüchtige Anteile wurden über zwei am Extruder angebrachte Entgasungsöffnungen abgezogen. Nach der Extrusion wurde das Granulat bei 200°C zu Formkörpern verspritzt und folgende mechanische Eigenschaften bestimmt:
Zug-Elastizitätsmodul ($N/mm^2$) nach DIN 53 457,
Reißfestigkeit ($N/mm^2$) nach DIN 53 455 und
Lochschlagzähigkeit ($kJ/m^2$) bei 23°C nach DIN 53 753-L-3.0 (Ausgabe 4/81).

Die ermittelten Ergebnisse sind in der folgenden Tabelle zusammengefaßt.

Tabelle

| Beispiele | Vgl. bsp. | Copolymerisat | Gew.-Teile Copolymerisat | Gew.-Teile Woll. | Woll. Typ | Einarbeitungsart | Mechanische Eigenschaften E-Modul | Reißfestigkeit | Lochschlagzähigkeit |
|---|---|---|---|---|---|---|---|---|---|
| | A | Granulat | 80 | 20 | 1 | Schmelze | 4280 | 69 | 15 |
| | B | Granulat | 80 | 20 | 2 | Schmelze | 4370 | 69 | 11 |
| 1 | | Granulat | 80 | 20 | 3 | Schmelze | 5260 | 72 | 13 |
| | C | Granulat | 80 | 20 | 4 | Schmelze | 4360 | 68 | 8 |
| | D | Granulat | 80 | 20 | 5 | Schmelze | 4305 | 69 | 11 |
| | E | Granulat | 80 | 20 | 6 | Schmelze | 4920 | 71 | 7 |
| 2 | | Granulat | 80 | 20 | 7 | Schmelze | 5300 | 72 | 14 |
| 3 | | Rohpolymerisat | 80 | 20 | 7 | Schmelze | 5220 | 73 | 13 |
| | F | Rohpolymerisat | 70 | 30 | 1 | Vormischung | 5320 | 68 | 10 |
| | G | Rohpolymerisat | 70 | 30 | 2 | Vormischung | 5310 | 69 | 11 |
| | H | Rohpolymerisat | 70 | 30 | 2 | Schmelze | 5660 | 66 | 9 |
| 4 | | Rohpolymerisat | 70 | 30 | 3 | Vormischung | 6360 | 70 | 11 |
| 5 | | Rohpolymerisat | 70 | 30 | 3 | Schmelze | 7800 | 75 | 10 |
| | I | Rohpolymerisat | 70 | 30 | 4 | Vormischung | 5280 | 67 | 8 |
| | K | Rohpolymerisat | 70 | 30 | 5 | Vormischung | 5250 | 68 | 10 |
| | L | Rohpolymerisat | 70 | 30 | 6 | Vormischung | 5510 | 66 | 7 |
| 6 | | Rohpolymerisat | 70 | 30 | 7 | Vormischung | 6310 | 71 | 12 |
| 7 | | Rohpolymerisat | 70 | 30 | 7 | Schmelze | 7660 | 76 | 11 |

## Patentansprüche

1. Verstärkte Polyoximethylen – Formmassen, bestehend aus
   (A) 95 bis 50 Gew. – Teile mindestens eines Polyoximethylen – homo – und/oder – copolymerisates,
   (B) 5 bis 50 Gew. – Teile Wollastonit,
   wobei sich die Gew. – Teile der Komponenten (A) und (B) auf 100 Gew. – Teile ergänzen sowie
   (C) gegebenenfalls Zusatzstoffe in wirksamen Mengen,
   dadurch gekennzeichnet, daß die Wollastonit – Kristalle (B) eine mittlere Dicke von gleich oder kleiner als 5 µm und ein mittleres Länge/Dicke – Verhältnis von gleich oder größer als 5 besitzen.

2. Verstärkte Polyoximethylen – Formmassen, bestehend aus
   (A) 95 bis 50 Gew. – Teilen mindestens eines Polyoximethylen – homo – und/oder – copolymerisates,
   (B) 5 bis 50 Gew. – Teilen Wollastonit,
   wobei sich die Gew. – Teile der Komponenten (A) und (B) auf 100 Gew. – Teile ergänzen und
   (C) 0 bis 60 Gew. – Teilen Zusatzstoffen,
   dadurch gekennzeichnet, daß die Wollastonit – Kristalle (B) eine mittlere Dicke von gleich oder kleiner als 5 µm und ein mittleres Länge/Dicke – Verhältnis von gleich oder größer als 5 besitzen.

3. Verstärkte Polyoximethylen – Formmassen nach einem der Ansprüche 1 bis 2, enthaltend ein Polyoximethylen – homo – und/oder – copolymerisat (A) mit einem durchschnittlichen Molekulargewicht (Gewichtsmittel) von 2000 bis 100.000 und einem MFI bei 190 ° C 21,17 N nach DIN 53 735 von 0,5 bis 200.

4. Verfahren zur Herstellung von verstärkten Polyoximethylen – Formmassen, die enthalten
   (A) mindestens ein Polyoximethylen – homo – und/oder – copolymerisat,
   (B) Wollastonit und gegebenenfalls
   (C) Zusatzstoffe,
   dadurch gekennzeichnet, daß die Wollastonit – Kristalle (B) eine mittlere Dicke von gleich oder kleiner als 5 µm und ein mittleres Länge/Dicke – Verhältnis von gleich oder größer als 5 besitzen und in die Schmelze der Komponente (A) eingebracht werden.

5. Verfahren zur Herstellung von verstärkten Polyoximethylen – Formmassen nach Anspruch 4, dadurch gekennzeichnet, daß die Wollastonit – Kristalle (B) mittels eines Extruders in die Schmelze der Kom – ponente (A) eingebracht werden.

6. Verfahren zur Herstellung von verstärkten Polyoximethylen – Formmassen nach Anspruch 4, dadurch gekennzeichnet, daß die Wollastonit – Kristalle (B) bei einer Temperatur von 180 bis 260 ° C in die Schmelze der Komponente (A) eingebracht werden.

7. Verwendung von verstärkten Polyoximethylen – Formmassen nach den Ansprüchen 1 bis 3 zur Her – stellung von Formkörpern.

## Claims

1. A reinforced polyoxymethylene molding material comprising
   (A) from 95 to 50 parts by weight of one or more polyoxymethylene homopolymers or copolymers and
   (B) from 5 to 50 parts by weight of wollastonite, the number of parts by weight of components (A) and (B) summing to 100 parts by weight,
   with or without
   (C) additives in effective amounts,
   wherein the wollastonite crystals (B) have a mean thickness equal to or smaller than 5 µm and a mean length/thickness ratio equal to or greater than 5.

2. A reinforced polyoxymethylene molding material comprising
   (A) from 95 to 50 parts by weight of one or more polyoxymethylene homopolymers or copolymers,

(B) from 5 to 50 parts by weight of wollastonite, the number of parts by weight of components (A) and (B) summing to 100 parts by weight, and
(C) from 0 to 60 parts by weight of additives,
wherein the wollastonite crystals (B) have a mean thickness equal to or smaller than 5 µm and a mean length/thickness ratio equal to or greater than 5.

**3.** A reinforced polyoxymethylene molding material as claimed in claim 1 or 2, containing a polyoxymethylene homopolymer or copolymer (A) having a mean molecular weight (weight average) of from 2,000 to 100,000 and an MFI, at 190° C and 21.17 N, of from 0.5 to 200, according to DIN 53,735.

**4.** A process for the preparation of a reinforced polyoxymethylene molding material which contains
(A) one or more polyoxymethylene homopolymers or copolymers and
(B) wollastonite, with or without
(C) additives,
wherein the wollastonite crystals (B) have a mean thickness equal to or smaller than 5 µm and a mean length/thickness ratio equal to or greater than 5 and are introduced into the melt of component (A).

**5.** A process for the preparation of a reinforced polyoxymethylene molding material as claimed in claim 4, wherein the wollastonite crystals (B) are introduced into the melt of component (A) by means of an extruder.

**6.** A process for the preparation of a reinforced polyoxymethylene molding material as claimed in claim 4, wherein the wollastonite crystals (B) are introduced into the melt of component (A) at from 180 to 260° C.

**7.** Use of a reinforced polyoxymethylene molding material as claimed in any of claims 1 to 3 for producing moldings.

**Revendications**

**1.** Matières à mouler en polyoxyméthylène renforcé, consistant en
(A) 95 à 50 parties en poids d'au moins un polyoxyméthylène homo- et/ou co-polymère,
(B) 5 à 50 parties en poids de wollastonite,
la somme des parties en poids des composants (A) et (B) étant égale à 100 parties en poids, et
(B) le cas échéant des additifs en quantités efficaces,
caractérisées en ce que les cristaux de wollastonite (B) ont une épaisseur moyenne égale ou inférieure à 5 µm et un rapport longueur/épaisseur moyen égal ou supérieur à 5.

**2.** Matières à mouler en polyoxyméthylène renforcé consistant en
(A) 95 à 50 parties en poids d'au moins un polyoxyméthylène homo- et/ou co-polymère,
(B) 5 à 50 parties en poids de wollastonite,
la somme des parties en poids des composants (A) et (B) étant égale à 100 parties en poids, et
(C) 0 à 60 parties en poids d'additifs,
caractérisées en ce que les cristaux de wollastonite (B) ont une épaisseur moyenne ou égale ou inférieure à 5 µm et un rapport longueur/épaisseur moyen égal ou supérieur à 5.

**3.** Matières à mouler en polyoxyméthylène renforcé selon l'une des revendications 1 ou 2, contenant un polyoxyméthylène homo- et/ou co-polymère (A) dont le poids moléculaire moyen (moyenne en poids) est de 2000 à 100 000, et le MFI, à 190 degrés C et 21,17 N selon DIN 53 735, est de 0,5 à 200.

**4.** Procédé de préparation de matières à mouler en polyoxyméthylène renforcé contenant :
(A) au moins un polyoxyméthylène homo- et/ou copolymère,
(B) de la wollastonite et éventuellement
(C) des additifs,
caractérisé en ce que les cristaux de wollastonite (B) ont une épaisseur moyenne égale ou inférieure à 5 µm et un rapport longueur/épaisseur moyen égal ou supérieur à 5, et en ce que ces cristaux sont incorporés dans la masse fondue du composant (A).

**5.** Procédé de préparation de matières à mouler en polyoxyméthylène renforcé selon la revendication 4, caractérisé en ce que les cristaux de wollastonite (B) sont incorporés dans la masse fondue du composant (A) à l'aide d'une extrudeuse.

**6.** Procédé de préparation de matières à mouler en polyoxyméthylène renforcé selon la revendication 4, caractérisé en ce que les cristaux de wollastonite (B) sont incorporés dans la masse fondue du composant (A) à une température de 180 à 260 degrés C.

**7.** Utilisation des matières à mouler en polyoxyméthylène renforcé selon les revendications 1 à 3 pour la fabrication d'objets moulés.